# EUROPÄISCHE PATENTANMELDUNG

(11) **EP 1 752 876 A2**
(43) Veröffentlichungstag der Anmeldung: **14.02.2007**
(21) Anmeldenummer: 06076467.7
(22) Anmeldetag: 21.07.2006
(51) Int. Cl.: G06F 11/263

(54) **Testsystem für ein Benutzerendgerät und Testautomatisierungsverfahren**

(30) Priorität: 12.08.2005 DE 102005038151
(71) Anmelder: Francotyp-Postalia GmbH, 16547 Birkenwerder (DE)
(72) Erfinder: Bleumer, Gerrit, Dr., 16552 Schildow (DE); Schwarz, Stefan, 10551 Berlin (DE)

(57) **Zusammenfassung**

Testautomatisierungsverfahren und Testsystems für ein Benutzerendgerät (1), dass mit einem Test-Automatisierungsgerät (10) kommunikativ verbindbar ist (gestrichelt gezeichnet). Das Testautomatisierungsgerät (10) weist mindestens eine Datenverarbeitungseinheit CPU (18) und einen nichtflüchtigen Speicher (17) zum Speichern eines Testablaufprogrammes auf sowie eine erste externe Schnittstelle (12) und eine zweite externe Schnittstelle (11) auf. Das Benutzerendgerät (1) weist mindestens eine Steuereinheit (58), einen nichtflüchtigen Speicher (57) und eine externe Schnittstelle (52) auf. Das Benutzerendgerät (1) ist durch ein Sicherheitsgehäuse (9) geschützt und weist eine interne Schnittstelle (53) auf, die mit der speziellen zweiten externen Schnittstelle (11) des Testautomatisierungsgerätes (10) kommunikativ verbindbar ist. Durch Laden einer Release-Software ist das Benutzerendgerät programmiert, Testausgabesignale zu erzeugen und an der externen Schnittstelle (52) auszugeben. Die Datenverarbeitungseinheit (18) des Testautomatisierungsgerätes (10) ist durch das Testablaufprogramm zur Ausführung mindestens einer Routine für mindestens einen Testfall programmiert und mit der speziellen Schnittstelle (11) verbunden, über welche die im Testfall simulierten Testeingabesignale an die interne Schnittstelle (53) des Benutzerendgerätes (1) übermittelt werden.

## Beschreibung

Die Erfindung betrifft ein Testsystem für ein Benutzerendgerät gemäß des Oberbegriffs des Anspruchs 1 und ein Testautomatisierungsverfahren gemäß des Oberbegriffs des Anspruchs 23. Die Erfindung kommt bei der automatisierten Testung und Diagnose von Frankiermaschinen und Buchungs- oder Postverarbeitungsgeräten oder anderen Benutzerendgeräten zum Einsatz.

Als eine Frankiermaschine für geringe Postaufkommen ist schon die T1000-Trend der Herstellerin Francotyp-Postalia GmbH bekannt, welche über ein Schnittstellenkabel einen externen Servicecomputer anschließbar ist. Die Frankiermaschine hat im Inneren eines Sicherheitsgehäuses einen fest angeordneten Thermotransferdruckkopf zum Drucken eines Frankierabdruckes und eine externe Standard-Schnittstelle zum Anschluss einer Portowaage, eines Servicecomputers vom Typ SC03 oder anderer Peripheriegeräte. Der Servicecomputer wird nur zum Auslesen und Dokumentieren von Maschinenparametern von serienmäßig hergestellten Frankiermaschinen genutzt, aber nimmt keine Dateneingabe via die Standard-Schnittstelle vor.
Eine andere bekannte Frankiermaschine vom Typ Jetmail ® der Herstellerin Francotyp-Postalia Beteiligungs AG ist für Büros mit mittleren bis hohen Postaufkommen vorgesehen und kann ebenfalls mit einem Servicecomputer verbunden werden, der über Schnittstellenkabel eine elektrische Leitungsverbindung mit der Frankiermaschine herstellt, welche bei Bedarf Registerstände und Maschinenparameter ausgibt.
Aus der EP 675 463 B1 ist eine Frankiermaschine der Firma SECAP bekannt, welche eine serielle Schnittstelle aufweist, über welche Displaydaten ganz oder teilweise ständig nach extern bereitgestellt werden. Der Nachteil der Erfindung ist, dass die Betriebsdaten ständig und bedingungslos nach extern bereitgestellt werden, insbesondere an eine zusätzlich aufmontierbare LCD-Anzeigeeinrichtung. Vorteilhaft ist, dass dazu kein zwischengeschalteter Personalcomputer benötigt wird.
Aus der EP 493 948 B1 ist eine Frankiermaschine der Firma NEOPOST bekannt, welche mit einem Computer bzw. Workstation zum Eingeben von Frankierungsdaten verbunden ist. Für den bloßen Betrieb ist es jedoch sehr aufwendig, wenn ein solches teures Gerät zusätzlich zur Frankiermaschine benötigt wird.
Bereits im US 4.525.786 wird eine Frankiermaschine der Firma Pitney Bowes beschrieben, in der ein Programmfragment gespeichert ist, welches dafür sorgt, dass die im nichtflüchtigen Speicher gespeicherten kritischen Abrechnungsdaten durch einen Mikroprozessor der Frankiermaschine während einer letzten Herstellungsphase auf vordefinierte Werte gesetzt werden jedoch gleichzeitig mittels einem Sperrbit verhindert, dass dies mehrmals geschehen kann, nachdem die Seriennummer der Frankiermaschine eingegeben worden ist. Zur Eingabe dient ein externes Terminal, welches über ein Datenkabel an eine externe Frankiermaschinen-Schnittstelle anschließbar ist.
Aus dem US 4.825.786 ist eine Frankiermaschine der Firma Pitney Bowes bekannt, welche in der Fabrik und im Feld mittels einer externen Programmsteuerung über eine Frankiermaschinen-Schnittstelle initialisiert und konfiguriert werden kann. Zum Testen braucht die Frankiermaschine nicht auseinander genommen werden.
Aus der DE 100 36 623 A1 ist bereits der Anschluss eines PersonalComputers, Laptops bzw. Notebook-PC's an eine Frankiermaschine vom Typ Jetmail ® bekannt, um die Frankiermaschine zu initialisieren. Eine Initialisierung erfolgt nur nach erfolgreicher Identifizierung des PersonalComputers, Laptops bzw. Notebook-PC's, wobei eine Autorisierung der Initialisierung mittels eines Autorisierungsmittels erfolgt, zum Beispiel mittels einer FP-Card, die in den Chipkartenleser der Frankiermaschine eingesteckt ist. Die Initialisierung umfasst auch eine Eingabe des Datums der Batterie eines Sicherheitsmoduls der Frankiermaschine, einer Telefonnummer des Teleportodatenzentrum des Bestimmungslandes und einer Portoabrufnummer PAN, sowie unter Einbeziehung des Teieportodatenzentrums ein Laden von Schlüsseln für ein Guthabennachladen in das Sicherheitsmodul. Jedoch ist kein Testen von serienmäßig hergestellten Frankiermaschinen mit den vorgenannten Mitteln vorgesehen.

Aus der US 4.639.918 ist ein automatischer Selbsttest einer Frankiermaschine bekannt, wobei der Benutzer einer Frankiermaschine einen Testmodus einstellen kann und dabei deren Tastatur dazu benutzt, durch Eingabe eines Codes ein Testprogramm aus einer Vielzahl von möglichen Testprogrammen auszuwählen, so dass dann die Frankiermaschine das ausgewählte Testprogramm abarbeitet und einen Diagnosetest ausführen kann. Nachteilig ist dabei, dass ein Auslesen und Dokumentieren von Diagnosetest-Daten nur visuell und manuell erfolgen kann. Diese Diagnosetest-Daten werden bei einer Reparatur oder turnusmäßigen Überprüfung der Frankiermaschine vom Service-Techniker ausgelesen, also weder bei der serienmäßigen Herstellung von Frankiermaschinen noch automatisch ausgelesen.

Aus dem Stand der Technik ist zwar allgemein bekannt, Benutzerendgeräte bei der Herstellung automatisch zu testen, indem ausgewählte Benutzerendgeräte im Betriebsmodus einem Dauertest unterworfen werden, aber Frankiermaschinen sind sehr hohen Anforderungen unterworfen und benötigen deshalb eine spezielle Zulassung.

Bei der Entwicklung von Frankiermaschinen wurde bisher eine DEBUG-Version und eine RELEASE-Version vor der serienmäßigen Herstellung von Frankiermaschinen erzeugt. Zur Fehlerbeseitigung unterscheidet sich die DEBUG-Version von der RELEASE-Version durch ein Vorsehen von zusätzlicher Hardware, Meßpunkten und Schnittstellen zum Anschluss von Mess- und Analysegeräten. Eine RELEASE-Version der Frankiermaschine wird der Postbehörde übergeben. Vor der serienmäßigen Herstellung von Frankiermaschinen ist deren Zulassung durch die Postbehörde oder durch eine staatlich dazu beauftragte Institution erforderlich. Die Postbehörde nimmt entweder selbst zahlreiche Tests an der Frankiermaschine vor oder beauftragt damit ein unabhängiges Prüflabor.
Natürlich erlaubt die DEBUG-Version einer Frankiermaschine bereits ein Testen von mindestens einzelnen Komponenten bzw. Baugruppen der Frankiermaschine, jedoch nur durch ein Vorsehen von zusätzlicher Hardware, Messpunkten und Schnittstellen zum Anschluss von Mess- und Analysegeräten. Diese zusätzlichen Mittel müssen zur Erzeugung einer RELEASE-Version der Frankiermaschine entfernt werden, da sonst die Frankiermaschine von einem Dritten in Fälschungsabsicht manipulierbar wäre. Für eine manipulierbare Version der Frankiermaschine wird natürlich keine Zulassung vergeben. Nachteilig ist nun, dass die DEBUG-Version gegenüber der RELEASE-Version einer Frankiermaschine ein unterschiedliches Zeitverhalten aufweist. In modernen Frankiermaschinen werden aktuelle Prozessoren mit sehr hohen Taktraten betrieben, die eine sehr hohe Verarbeitungsgeschwindigkeit und damit moderne Kryptographie überhaupt erst möglich machen. Ein unterschiedliches Zeitverhalten gegenüber der DEBUG-Version kann sich deshalb zu einem Fehler auswirken und folglich würde die Zulassung der Frankiermaschine verweigert werden. Frankiermaschinen sind zwar wegen der sehr hohen Anforderungen besonders betroffen, jedoch gibt es auch für andere Benutzerendgeräte ständig neue Normen zu berücksichtigen und damit auch neue Zertifizierungen zu erlangen, wenn der Hersteller mit seinem Erzeugnis auf einem Markt erfolgreich sein will.

Um ein Benutzerendgerät zu testen, müssen im Idealfall alle möglichen Benutzereingaben durchgespielt werden, um so jedes mögliche Verhalten des Benutzerendgerätes auszuprobieren und mit dem spezifizierten Sollverhalten abzugleichen. Um diesen vollständigen Test auch nur annähernd zu erreichen, sollten bei komplexen und funktionsreichen Benutzerendgeräten die Benutzereingaben automatisiert werden. Damit die Testergebnisse aussagekräftig sind, muss die Automatisierung so erfolgen, dass die Testeingaben durch ein Input-Event-Management-System des Betriebssystems des Benutzerendgeräts nicht mit anderer Priorität und anderem Zeitverhalten verarbeitet werden, als Eingaben über die Tastatur. Außerdem muss ein Nachteil des Benutzerendgerätes überwunden werden, dass durch eine eigens erstellte Testsoftware im Test ein Verhalten identifiziert wird, welches vom Verhalten eines Benutzerendgeräts mit
Release-Software abweicht.
Damit möglichst viele Funktionen des Benutzerendgeräts automatisiert getestet werden können, muss das Benutzerendgerät alle relevanten Ausgaben an einer geeigneten Testschnittstelle in einem geeigneten Format ausgeben, so dass ein zur Testautomatisierung geeignetes Datenverarbeitungsgerät die relevanten Ausgaben zu jeder Eingabe erfassen, aufzeichnen und verarbeiten kann. Einschränkungen für die Ausgaben ergeben sich dadurch, dass nicht alle Ausgaben relevant sind und vom Benutzerendgerät mit Release-Software ausgegeben werden müssen, manche sollten nicht ausgegeben werden und einige dürfen nicht ausgegeben werden.

Der Erfindung liegt die Aufgabe zugrunde, zur Testautomatisierung ein Testsystem für ein Benutzerendgerät zu schaffen, um eine automatisierte Eingabe und damit schnelleres und vollständigeres Testen zu ermöglichen, wobei das Benutzerendgerät die oben genannten Nachteile nicht aufweist. Außerdem soll ein Testautomatisierungsverfahren geschaffen werden, welches widerspiegelt, wie ein Benutzerendgerät mit Release-Software so vorbereitet werden kann, dass ein automatisiertes Testen aller relevanten Ausgaben ermöglicht wird, ohne dass sicherheitskritische Ausgaben im produktiven normalen Betrieb unkontrolliert abgefragt oder abgefangen werden können. An einer Testschnittstelle sind deshalb die Ausgaben so geschützt bereitzustellen, dass sie im normalen Betrieb von einem angreifenden Benutzer nicht missbraucht werden können.

Die Aufgabe wird mit den Merkmalen des Testsystems nach dem Anspruch 1 und mit den Merkmalen des Testautomatisierungsverfahrens nach dem Anspruch 23 gelöst.

Die Erfindung basiert auf dem Gedanken, dass jedes Benutzerendgerät eine Reihe von Ein- und Ausgabeschnittstellen aufweist, wobei schon vorhandene interne Schnittstellen nunmehr auch zu Testzwecken benutzt werden, um mindestens eine einzelne Baugruppe des Benutzerendgerätes und zugehörigen Softwarekomponenten zu testen. In vorteilhafter Weise ist eine interne Schnittstelle durch das Gehäuse des Benutzerendgerätes geschützt. Die interne Schnittstelle ist zu zusätzlichen Testzwecken nur nach entsprechender Autorisierung des Testautomatisierungsgerätes nutzbar. Im einfachsten Fall ist an eine interne Schnittstelle lediglich eine Tastatur angeschlossen, über welche im normalen Betriebsfall alle Benutzereingaben entgegengenommen werden. Über diese bereits vorhandene interne Schnittstelle gibt ein Testautomatisierungsgerät nun simulierte Tastensignale zu Testzwecken ein. Eine Abstraktion der Eingaben ermöglicht dabei auch zusätzliche Eingaben, welche im normalen Betriebsfall über die normale Tastatur nicht möglich sind. Ein nichtflüchtiger Speicher des Benutzerendgerätes ist zum Laden einer Release-Software ausgebildet. Ein Benutzerendgerät besitzt gleichzeitig eine Reihe von Ausgabeschnittstellen und Aktoren. Im Falle von Frankiermaschinen besitzen diese ein Display und ein Druckwerk, um Frankierabdrucke zu erzeugen, sowie Motoren oder Elektromagnete als elektro-mechanische Aktoren. Zusätzlich kann eine Chipkarten-Schreib/ Leseeinrichtung vorgesehen sein, um Daten auf eine Chipkarte schreiben. Durch entsprechende Autorisierung über zusätzliche Eingaben gelingt es, die Ausgaben so geschützt bereitzustellen, dass sie im normalen Betrieb von einem angreifenden Benutzer nicht missbraucht werden können.
Das Testsystem besteht aus einem Testautomatisierungsgerät, dem Benutzerendgerät und aus Kommunikationsverbindungen zwischen den beiden Geräten über entsprechende Schnittstellen. Das Testautomatisierungsgerät wird durch eine übliche Datenverarbeitungseinrichtung realisiert, welche mit mindestens einer Erweiterungskarte ausgestattet ist, durch welche mindestens eine bidirektionale serielle Schnittstelle angesteuert werden kann. Eine übliche Datenverarbeitungseinrichtung kann zum Beispiel ein handelüblicher Personalcomputer sein, der zum Einsetzen von Erweiterungskarten schon vorbereitet ist.
Für die Automatisierung ist vorgesehen, dass das Testautomatisierungsgerät Mittel zum Erzeugen von simulierten Testeingabesignalen und zu deren Übermittlung zum Benutzerendgerät umfasst, dass Testeingaben von extern über die Tastaturschnittstelle des Benutzerendgeräts erfolgen sowie dass die Testeingaben durch ein Input-Event-Management-System des Betriebssystems des Benutzerendgeräts mit gleicher Priorität und Zeitverhalten verarbeitet werden, wie Eingaben über die Tastatur. Ausserdem liegt auch für den Test nur eine einzige in das Benutzerendgerät geladene Release-Software vor, d.h. es existieren keine unterschiedlichen Softwareversionen. Somit kann der Nachteil von einer eigens erstellte Testsoftware nicht mehr auftreten, dass im Test ein Verhalten identifiziert wird, dass in der produktiven Software nicht auftreten kann.
Das Testautomatisierungsgerät weist ein Programmspeichermittel, eine Datenverarbeitungseinheit und ein Kontaktfeld zum Steuern von Kontakten auf, die zur Translation von Testaktionen und -daten des Testfalls in simulierte Testeingabesignale dienen. Eine Erweiterungskarte ist zum Ansteuern der Kontakte und der Schnittstellen entsprechend ausgebildet.

Um die Basisfunktionalität eines Benutzerendgeräts möglichst vollständig zu testen, werden die Eingaben vom Testautomatisierungsgerät gemäß einem gespeicherten Testplan erzeugt und als Eingabesignale an das Benutzerendgerät übermittelt. Die resultierenden Ausgaben des Benutzerendgeräts am Display und am Drucksystem sind anschließend als Ausgabesignale an das Testautomatisierungsgerät zurück zu übermitteln und dort gegen die im Testplan hinterlegten Sollwerte abzugleichen.
Das Testautomatisierungsverfahren umfasst die Schritte:
i. Bereitstellung eines Testprogramms und Ausführung mindestens einer Routine für einen ersten Testfall,
ii. Translation von Testaktionen und -daten des Testfalls in simulierte Testeingabesignale (Tastensequenzen),
iii. Übermitteln der simulierten Testeingabesignale zum Benutzerendgerät,
iv. Interpretation der simulierten Testeingabesignale im Benutzerendgerät,
v. Durchführung einer entsprechenden Steuerung im Benutzerendgerät und Konvertierung von Anzeigeinhalten und Steuerungssignalen (Aktorsignalen) in Testausgabesignale,
vi. Übermitteln der Testausgabesignale vom Benutzerendgerät zum Testautomatisierungsgerät,
vii. Translation von Testausgabesignale zu Auswertedaten.

Das Testautomatisierungsgerät kann vorteilhaft ein Benutzerendgerät testen, welches eine Release-Software geladen hat, wobei diese Release-Software an einer separaten Testschnittstelle alle relevanten Ausgaben in einem geeigneten Format ohne Verzögerung bereitstellt. Typische Einsatzgebiete für das Testautomatisierungsgerät sind:
- Während und nach der Entwicklung eines neuen oder Weiterentwicklung eines bestehenden Benutzerendgerätemodells. Nach Fehlerbeseitigung eines bestehenden Benutzerendgerätemodells.
- Beim Zulieferer von Softwarekomponenten zu einem Benutzerendgerätemodell. Mithilfe des Testautomatisierungsgerätes kann der Zulieferer bereits vor Auslieferung seiner Komponente deren Integration in das Benutzerendgerät testen.
- Beim Servicetechniker für ein Benutzerendgerätemodell. Mithilfe des Testautomatisierungsgeräts kann ein Servicetechniker beim Kunden vor Ort eine neu eingespielte Softwarekomponente sofort auf erfolgreiche Installation prüfen.

In vorteilhafter Weise werden die Ausgabedaten an der Testschnittstelle so geschützt bereitgestellt, dass sie im normalen Betrieb von einem angreifenden Benutzer nicht missbraucht werden können.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1,: vereinfachtes Blockschaltbild eines Testsystems mit einem Benutzerendgerät und mit einem Test-Automatisierungsgerät,
- Fig. 1a,: erste Variante des Testsystems mit Kabelverbindung,
- Fig. 1b,: zweite Variante des Testsystems mit kabelloser Kommunikationsverbindung,
- Fig. 2,: perspektivische Ansicht von einer Frankiermaschine und einem Service-Computer,
- Fig. 3a,: Blockschaltbild eines Testsystems mit einem Benutzerendgerät und mit einem Test-Automatisierungsgerät,
- Fig. 3b,: perspektivische Ansicht von einer geöffneten Frankiermaschine und dem Test-Automatisierungsgerät,
- Fig. 4,: perspektivische Ansicht von einer Frankiermaschine mit geschlossenem Gehäuse von vorn, rechts und oben,
- Fig. 5,: schematische Darstellung eines Tastaturfeldes,
- Fig. 6,: vereinfachter Tastaturschaltplan,
- Fig. 7,: Takterzeugungsplan,
- Fig. 8,: Flussdiagramm für einen automatisierten Testablauf,
- Fig. 9,: Routine zur Identifizierung des Testautomatisierungsgeräts gegen das Benutzerendgerät.

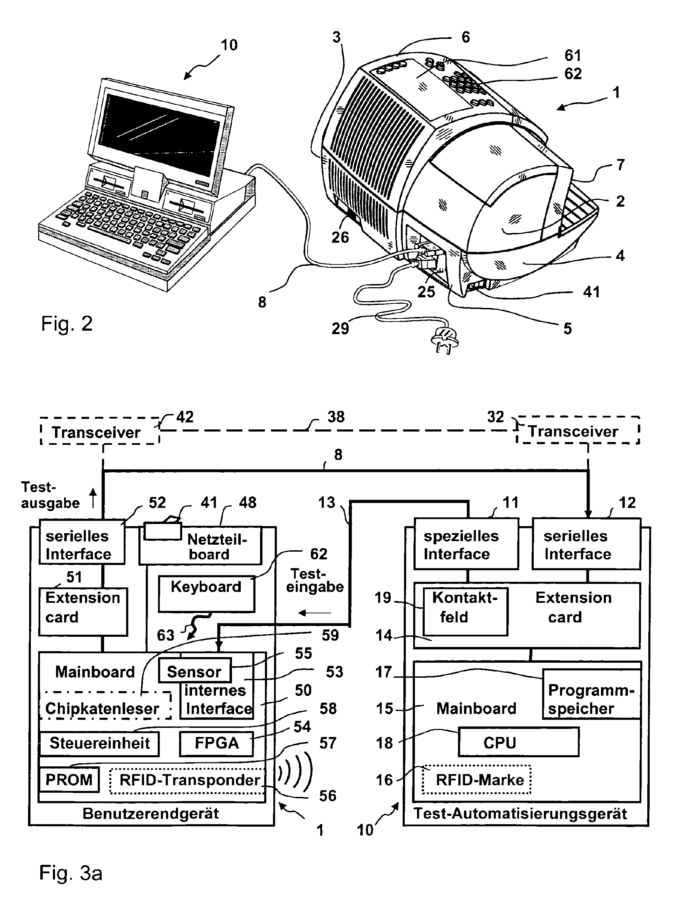

Die Fig. 1 zeigt ein vereinfachtes Blockschaltbild eines Testsystems mit einem Benutzerendgerät 1 und mit einem Test-Automatisierungsgerät 10, welche beide kommunikativ verbindbar sind (gestrichelt gezeichnet). Das Testautomatisierungsgerät 10 weist mindestens eine Datenverarbeitungseinheit CPU 18 und einen nichtflüchtigen Speicher 17 zum Speichern eines Testablaufprogrammes auf sowie eine erste externe Schnittstelle 12 und eine zweite externe Schnittstelle 11 auf. Das Benutzerendgerät 1 weist mindestens eine Steuereinheit 58, einen nichtflüchtigen Speicher 57 und eine externe Schnittstelle 52 auf. Das Benutzerendgerät 1 ist durch ein Sicherheitsgehäuse 9 geschützt und weist eine interne Schnittstelle 53 auf, die mit der speziellen zweiten externen Schnittstelle 11 des Testautomatisierungsgerätes 10 kommunikativ verbindbar ist. Die Steuerungseinheit 58 und der nichtflüchtige Speicher 57 des Benutzerendgerätes 1 sind zum Laden einer Release-Software ausgebildet, wodurch das Benutzerendgerät programmiert ist, Testeingabesignale zu verarbeiten und entsprechende Testausgabesignale zu erzeugen und an der externen Schnittstelle 52 auszugeben. Die Datenverarbeitungseinheit 18 des Testautomatisierungsgerätes 10 ist durch das Testablaufprogramm zur Ausführung mindestens einer Routine für mindestens einen Testfall programmiert. Die Datenverarbeitungseinheit 18 ist mit der speziellen Schnittstelle 11 verbunden, über welche die im Testfall simulierten Testeingabesignale an die interne Schnittstelle 53 des Benutzerendgerätes 1 übermittelt werden.

Die Fig. 1a zeigt eine erste Variante des Testsystems mit Kabelverbindung als Detail des vereinfachtes Blockschaltbild nach Fig. 1. Die Kommunikationsverbindung erfolgt über ein Kabel 13.

Die Fig. 1b zeigt eine zweite Variante des Testsystems mit kabelloser Kommunikationsverbindung. Es ist vorgesehen, dass die zweite spezielle Schnittstelle 11 des Testautomatisierungsgerätes 10 und die spezielle Schnittstelle 53 des Benutzerendgerätes 1 gleich aufgebaut und jeweils mit einem Transceiver 43 bzw. 31 ausgestattet sind, welche via Kommunikationskanal 33 miteinander kommunikativ verbunden sind.

Die Fig. 2 zeigt eine perspektivische Ansicht von einer Frankiermaschine vom Typ Optimal 30® der Herstellerin Francotyp-Postalia GmbH und einem Computer 10, welche über Schnittstellen verfügen und via ein Datenkabel 8 kommunikativ miteinander verbunden sind. Die Frankiermaschine 1 ist von der Rückseite 5, linken Seite 4 der Unterschale und Oberseite 6 einer Oberschale 2 dargestellt. Auf der linken Seite 4 der Unterschale befindet sich ein Schalter 41, mit welcher die Frankiermaschine eingeschaltet werden kann. Auf der Oberseite 6 sind eine Anzeigeeinrichtung 61 und eine Eingabeeinrichtung 62 angeordnet. Eine Briefzuführung erfolgt an der Vorderseite 7 der Frankiermaschine 1 von der linken Seite 4 zur rechten Seite 3. Es ist vorgesehen, dass die Oberschale 2 über der Unterschale des Frankiermaschinengehäuses abnehmbar angeordnet ist. Die Oberschale 2 des Frankiermaschinengehäuses ist nur von einer autorisierten Person, zum Beispiel einem Servicetechniker, abnehmbar. Eine erste Öffnung 25 an der Rückseite 5 liefert einen Zugang zum Netzanschluss über ein Netzkabel 29 und einen zweiten Zugang zu einer seriellen Schnittstelle über ein Datenkabel 8. Eine zweite Öffnung 26 an der Rückseite 5 nahe der rechten Seite 3 der Unterschale liefert einen Zugang zum Anschluss eines Kommunikationsnutzes.
Alternativ kann natürlich die jeweilige Öffnung für den Zugang zu einer seriellen Schnittstelle auch in einer anderen nicht gezeigten Weise in irgendeiner der beiden Gehäuseschalen des Frankiermaschinengehäuses angeordnet sein. Die über die erste Öffnung 25 des Frankiermaschinengehäuses zugängliche serielle Schnittstelle und die serielle Schnittstelle des Computers 10 sind dabei vom gleichen Typ.

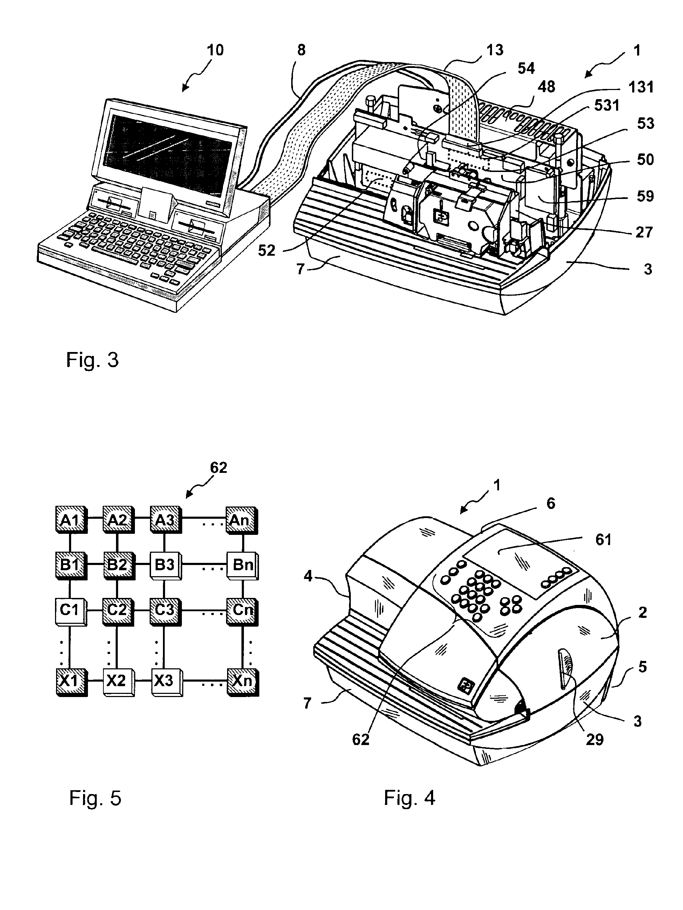

Die Fig. 3a zeigt ein Blockschaltbild eines Testsystems mit einem Benutzerendgerät und mit einem Test-Automatisierungsgerät. Das Benutzerendgerät weist mindestens eine externe Schnittstelle 52 als Testausgabe-Interface und ein Mainboard 50 mit einer internen Schnittstelle 53 als Testeingabe-Interface sowie eine Eingabeeinrichtung 62 auf. Letztere ist beispielsweise eine Tastatur (Keyboard), welche im normalen Betriebsmodus mit der internen Schnittstelle 53 verbunden ist, aber im gezeigten Testmodus abgesteckt worden ist. Das Mainboard 50 weist weiterhin mindestens einen Programmspeicher (PROM) 57, eine Steuereinheit 58, eine programmierbare Logik (FPGA) 54 und optional eine mit Strich-Punkt-Linien gezeichnete Chipkarten-Schreib/Leseeinheit 59 oder einen gepunktet gezeichneten RFID-Transponder 56 auf. Die Chipkarten-Schreib/Leseeinheit 59 kann als zusätzliches Mittel zur Identifizierung des Testautomatisierungsgerätes vorgesehen sein, wobei die Steuereinheit 58 des Benutzerendgerätes 1 zur Eingabe einer Identifizierungsnummer des Testautomatisierungsgerätes 10 über eine Chipkarte programmiert ist. Als zusätzliches Mittel zur Identifizierung des Testautomatisierungsgerätes kann auch ein RFID-Transponder 56 des Benutzerendgerätes 1 dienen, welcher mit einer RFID-Marke 16 des Test-Automatisierungsgerätes 10 kommuniziert.
Alternativ zur programmierbaren Logik 54 kann im Benutzerendgerät auch eine anwendungsspezifische integrierte Schaltung (ASIC) eingesetzt werden.
Zwischen dem Mainboard 50 und der externen Schnittstelle 52 kann eine Erweiterungskarte 51 (Extension Card) geschaltet sein. Das Benutzerendgerät 1 ist kommunikationsmäßig mit dem Test-Automatisierungsgerät 10 verbunden. Vorzugsweise wird in einer ersten Ausführungsvariante ein erstes Datenkabel 8 zur kommunikativen Verbindung eingesetzt.
Alternativ zum Datenkabel 8 ist auch eine - in der Figur 3a gestrichelt gezeichnete - Variante möglich, welche eine drahlose Kommunikationstechnik mit Transceivern 42, 32 und einem Kommunikationskanal 38 verwendet, um die Kommunikationsverbindung zwischen dem Benutzerendgerät 1 und dem Test-Automatisierungsgerät 10 herzustellen. Die vorgenannten Transceiver 42, 32 werden dazu entweder auf die externe Schnittstellen 52, 12 aufgesteckt oder ersetzen diese.

Das Test-Automatisierungsgerät 10 weist mindestens eine erste externe Schnittstelle 11 als Interface zur Ausgabe der Testeingabedaten und eine zweite externe Schnittstelle 12 als Interface zur Eingabe der Testausgabedaten sowie ein Mainboard 15 auf. Zwischen dem Mainboard 15 und den externen Schnittstellen 11 und 12 ist eine Erweiterungskarte 14 (Extension Card) geschaltet, die mit einem steuerbaren Kontaktfeld 19 ausgestattet ist. Alternativ kann auch das spezielle Interface mit dem steuerbaren Kontaktfeld 19 ausgestattet sein. Das Test-Automatisierungsgerät weist einen entsprechenden Programmspeicher 17, eine CPU 18 und gegebenenfalls eine gepunktet gezeichnete RFID-Marke (Radio Frequency ID) 16 auf. Die erste externe Schnittstelle 11 ist zur Ausgabe der Testeingabedaten an die interne Schnittstelle 53 des Benutzerendgerätes angepasst. In Vorbereitung auf den Testmodus wird zum Beispiel das Gehäuse des Benutzerendgerätes geöffnet und ein - in der Figur 3a nicht gezeigter - Tastaturverbindungsstecker für die Tastatur des Benutzerendgerätes wird vom Sockel der Hauptplatine 15 (Mainboard) abgesteckt. Stattdessen wird nun durch Aufstecken eine serielle Verbindung vom Sockel über einen Stecker (nicht gezeigt) und Flachbandkabel 13 zur seriellen Schnittstelle der Erweiterungskarte des Testautomatisierungsgerätes geschaffen. Über diese Verbindung sendet das Testautomatisierungsgerät in der bevorzugten Lösungsvariante Eingabesignale simulierter Tastaturtastendrucke an das Benutzerendgerät. Das Benutzerendgerät mit einem Sensor 55 versehen, der detektiert, ob der Stecker des Flachbandkabels 13 des Testautomatisierungsgerätes mit dem Sockel bzw. einer Tastatursteckdose auf dem Mainboard oder in einer Gehäusemulde verbunden bleibt. Der Schalter 41, mit welcher die Frankiermaschine eingeschaltet werden kann, ist mit einem Netzteil auf der Netzteilleiterplatte 18 verbunden, welches die Hauptplatine 15 und die übrigen elektrischen Baugruppen speist.
Erfindungsgemäß wird die erste externe Schnittstelle 11 als Testausgabe-Interface benutzt und wird kommunikativ mit der internen Schnittstelle 53 des Benutzerendgerätes 1 verbunden. Die zweite externe Schnittstelle 12 des Test-Automatisierungsgerätes 10 wird als Testeingabe-Interface benutzt und wird kommunikativ mit der externen Schnittstelle 52 des Benutzerendgerätes 1 verbunden.

Das Benutzerendgerät 1 ist beispielsweise eine Frankiermaschine vom Typ Optimal 30®. Die Frankiermaschine ist mit einer internen Schnittstelle 53 ausgestattet, an welcher - in der Fig. 3a gezeigte Weise - im Testmodus ein Datenkabel 13 des Test-Automatisierungssystems 10 zum Beispiel über einen - in der Fig. 3b gezeigten - Steckverbinder angesteckt ist. Im anderen - nicht gezeigten - Betriebsmodus ist die Eingabeeinrichtung 62 mit der internen Schnittstelle 53 verbunden. Von der Eingabeeinrichtung 62 wird ebenfalls zum Beispiel ein Datenkabel 63 über einen - nicht gezeigten - Steckverbinder mit der internen Schnittstelle 53 verbunden. Letztere ist mit einem FPGA (Field programmable Gate Array) Baustein ausgestattet oder mit einem FPGA verbunden. Der FPGA Baustein stellt Taktsignale für die Eingabeeinrichtung 62 zur Verfügung und verarbeitet die empfangenen Eingabesignale.
Im Ausführungsbeispiel einer Frankiermaschine vom Typ Optimal 30® ist die Eingabeeinrichtung 62 ein Keybord mit einem angeschlossenen Datenkabel 63 und einer lösbaren Verbindung am Mainboard 50. Alternativ oder zusätzlich kann eine lösbare Verbindung am Keyboard vorgesehen sein. Bei einer Frankiermaschine vom Typ Jetmail® existiert im Meterunterteil nahe dem Keyboard eine Gehäusemulde für eine lösbare Steckverbindung. Bei einer absteckbaren Tastatur bzw. abnehmbaren Meter mit Tastatursteckdose in Gehäusemulde wird alternativ die Stecktastatur entfernt bzw. Steckverbindung getrennt und das Testautomatisierungsgerät direkt mit der Tastatursteckdose in der Gehäusemulde verbunden. Das Kontaktfeld 19 ersetzt die Tastatur des Endgerätes 1.
In einem anderen Ausführungsbeispiel zum Testen eines anderen Benutzerendgerätes kann die Eingabeeinrichtung 62 beliebig anders, zum Beispiel als Touch-in-Screen zur tastaturlosen Eingabe oder zur Spracheingabe, ausgebildet sein. Die Eingabeeinrichtung 62 des Benutzerendgerätes kann zum Beispiel auch als neuronale Schnittstelle ausgebildet sein. Eingabeeinrichtungen können mehrfach und von gleicher oder von unterschiedlicher Art vorhanden sein. Jedoch muss mindestens eine Eingabeeinrichtung 62 des Benutzerendgerätes vorhanden sein, die mit der internen Schnittstelle 53 verbindbar ist. Bei solchen Eingabeeinrichtungen von Benutzerendgeräten ist eine schnelle automatische Testung der Eingabemöglichkeiten und der Reaktionen darauf schon deshalb nötig, weil die Vielfalt der Eingabemöglichkeiten immer weiter anwächst.

Alternativ zum Datenkabel 13 ist auch eine drahlose Kommunikationstechnik geeignet, um die Kommunikationsverbindung mit der internen Schnittstelle 53 herzustellen. Die interne Schnittstelle 53 und die spezielle erste Schnittstelle 11 des Testautomatisierungsgerätes 10 sind dann - in nicht gezeigter Weise - als Transceiver ausgebildet. Die Eingabeeinrichtung 62 muss dann natürlich ebenfalls einen Transceiver aufweisen, der mit dem Transceiver des Mainboards 50 im normalen Betriebsmodus in Kommunikationsverbindung steht. Das hat den Vorteil, dass die Ein-gabeeinrichtung 62 auch von extern des Benutzerendgerätes bedient werden kann. Solche Benutzerendgeräte sind als Radio- und Fernseh-geräte oder Medienabspiel- bzw. Aufnahme/Wiedergabegeräte bekannt, die mit einer Fernbedienung ausgestattet sind.
In einem weiteren - nicht gezeigten - Ausführungsbeispiel zum Testen eines weiteren Benutzerendgerätes, wobei letzteres bereits auf den Anschluss eines Testautomatisierungsgerätes vorbereitet ist, kann das Benutzerendgerät statt jeweils über die gleiche physische Schnittstelle (z.B. RS232, USB, FireWire, Bluetooth) nunmehr über dieselbe physische Schnittstelle an das zur Testeingabe verwendete zweite Interface und das zur Testausgabe verwendete erste Interface des Testautomatisierungsgerätes angeschlossen werden.

Die Fig. 3b zeigt eine perspektivische Ansicht von einer geöffneten Frankiermaschine 1 und dem Test-Automatisierungsgerät 10. Beide Geräte sind von vorn, rechts und oben dargestellt. Die Frankiermaschine 1 ist im normalen Betrieb mit einer ansteckbaren in einer oberen Gehäuseschale 2 montierten Eingabeeinrichtung 62 betreibbar, welche hier aber abgenommen ist. Die Frankiermaschine 1 ist im Test-Betrieb angesteuert durch das Test-Automatisierungsgerät über ein ansteckbares Datenkabel 13 betreibbar, welche hier als Flachbandkabel ausgebildet ist. Die Frankiermaschine 1 ist geöffnet und weist in der Unterschale ein nicht sichtbares Chassis auf, auf welchen eine Grundplatte 27 des Druckwerkes nahe der Vorderseite 7 und eine Netzteilleiterplatte 48 nahe der Rückseite 5 der Frankiermaschine 1 stehend angeordnet sind. Zwischen der Grundplatte 27 und der Netzteilleiterplatte 48 ist die Hauptleiterplatte (Mainboard) 50 angeordnet. An der rechten Seite 3 der Frankiermaschine 1 ist die Chipkarten-Schreib/Leseeinheit 59 auf dem Mainboard 50 angeordnet. Auf der zur Oberschale 2 des Frankiermaschinengehäuses zugewandten Seite des Mainboards 50 ist das interne Interface 53 und eine zugehörige mehrpolige Steckerbuchse 531 angeordnet, in welche ein Stecker 131 des Flachbandkabels 13 gesteckt ist, welches mit dem Test-Automatisierungsgerät 10 schnittellenmäßig verbunden ist. Ein FPGA-Baustein 54 ist Bestandteil des internen Interfaces 53 oder des Mainboards 50 und steuert beide Mainboards 50 und das interne Interface 53 an.
Ein als Rundkabel ausgeführtes Datenkabel 8 ist mit dem seriellen Interface 52 des Mainboards 50 der Frankiermaschine 1 über den Zugang in der ersten Öffnung auf der Rückseite 5 der Frankiermaschine 1 verbunden. Hierbei kommen entsprechende handelsübliche Steckverbinder in bekannter Weise oder andere in ihrer Wirkung gleiche Übertragungsmittel zum Einsatz. Das Datenkabel 8 ist ebenfalls mit dem Test-Automatisierungsgerät 10 schnittstellenmäßig verbunden.
Bei anderen Benutzerendgeräten können die Steckverbinder und Datenkabel bzw. Flachbandkabel entfallen, wenn beide, das Benutzerendgerät als auch das Test-Automatisierungsgerät 10 über solche Bluetooth-Kommunktationsmittel oder andere drahlose Kommunikationsmittel als Schnittellen zur Eingabe verfügen.

Die Fig. 4 zeigt eine perspektivische Ansicht von einer Frankiermaschine vom Typ Optimal 30® mit geschlossenem Gehäuse von vorn, rechts und oben. Von der Unterschale des Frankiermaschinengehäuses sind nur die Vorderseite 7 und rechte Seite 3 sichtbar aber die linke Seite 4 und die Rückseite 5 sind verdeckt. Die Poststückzu- und -abführung erfolgt auf der Vorderseite 7 von der linken Seite 4 und zur rechten Seite 3 der Frankiermaschine 1. Auf der Gehäuseunterschale ist die Gehäuseoberschale 2 montiert. Hier sind auf der Oberseite 6 der Frankiermaschine ein Display 61 und eine als Eingabeeinrichtung 62 dienende Tastatur sichtbar. Aus ergonomischen Gründen bleiben Eingabemöglichkeiten ungenutzt, die sich bei einer anderen Gestaltung des Tastaturfeldes bieten würden. Der Platz auf der Tastenmatte wird also nicht vollständig ausgenutzt.

In der Fig. 5 werden anhand einer schematische Darstellung eines Tastaturfeldes die restlichen ungenutzt verbleibenden Eingabemöglichkeiten herausgestellt. Die Tastatur des Benutzerendgeräts ist durch ein Keypad realisiert, das eine Matrix von Tasten bereitstellt. Von diesen möglichen Tasten werden typischerweise nur diejenigen genutzt, die von der geometrischen Lage her zum Tastaturlayout des Benutzerendgeräts passen (schraffierte Tasten). Typischerweise bleiben dabei einige Tasten des Keypads ungenutzt (weiße Tasten).

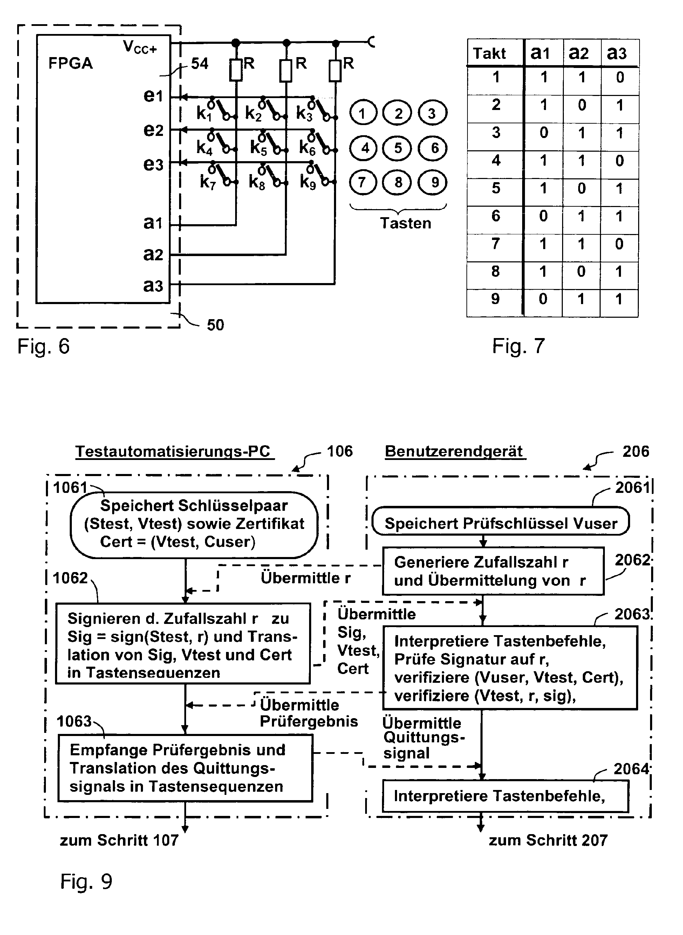

Die Fig. 6 zeigt einen vereinfachten Tastaturschaltplan einer Tastatur des Benutzerendgeräts. In den Schnittpunkten einer Matrix aus den Leitungen zu den Eingängen e1, e2, e3 und zu den Ausgängen a1, a2, a3 liegen die Kontakte der Tasten. Der FPGA (Field programmable Gate Array) Baustein übernimmt die gesamte Steuerung der Matrix. Bei einem Tastendruck geschieht folgendes: Die Ausgänge des FPGAs a1, a2, a3 werden bei gegebenem Takt mit einem wechselnden Bitmuster getrieben, das einer "walking zero" entspricht (siehe Fig. 7).

In der Fig. 7 ist ein Takterzeugungsplan dargestellt. Solange keine Taste gedrückt wird, liegt an jeder der an den Ausgänge a1, a2, a3 angeschlossenen Ausgangsleitungen eine 'Eins' an. Sobald zum Beispiel die Taste "4" gedrückt wird, so erhält der Ausgang a1 im Takt 3, 6, 9, usw. eine Null, in allen anderen Takten eine Eins. Damit der Tastendruck sicher registriert wird, muss er also mindestens 3 Takte lang dauern. Tastenkombinationen, die einer längeren Eingabe bedürfen oder auch die gleichzeitige Kombination von Matrixelementen sind dadurch realisiert, dass der FPGA Baustein, nach Vorbild der Tastaturpuffer in gängigen Betriebssystemen, die Tastendrücke in einem Feld speichert und beim Erreichen einer Obergrenze, die Verarbeitung dieser Zwischenspeicherung beginnt.
Bei der Takterzeugung liegen an jedem der Ausgänge a1, a2, a3 andere Signalpegel an. Zum Beispiel liegen im dritten Takt die Signalpegel in der dualen Form 011 an. Die Dauer eines Zyklusses beträgt gleich 150 ms beim Ausgeben von Signalpegeln in der dualen Form 011 bis wiederum 011. Eine Taste ist eine der Funktionstasten, die einer längeren Betätigung bedürfen, wobei ein Überschreiten der Obergrenze ≥ 50 ms einer Dauerbetätigung gleichkommt. Bei einer simulierten Betätigung muss ein Tastendrücken mindestens diese Dauer simuliert werden.
Bei einer Maschine, bei der die aufgrund der Geometrie 25 Tasten nach außen gelegt sind, verbleiben zum Beispiel 5 Tasten ungenutzt. Versieht man die Eingangsauthentifizierung mit einer dreistelligen Tastenkombination, wobei die zusätzlichen fünf Tasten eingeblendet und zwingend Teil dieser Sequenz sind, bestehen 27000 Möglichkeiten, falls Wiederholungen und eine freie Reihenfolge der Tastsequenzen erlaubt werden.
Wird nun die Tastatur vom Mainboard abgesteckt und stattdessen das Testautomatisierungsgerät über die Testeingabeschnittstelle an das Mainboard angeschlossen, so kann das Testautomatisierungsgerät zum Beispiel über Relais-Kontakte nicht nur diejenigen, die mechanisch ausgeführt sind, sondern auch jede der möglichen Tasten und Tastenkombinationen und damit auch jede mögliche Tastensequenz auslösen. Bei entsprechender Wahl der Solltasten oder -Kombinationen (mechanisch nicht vorhandene Taste, Geschwindigkeit, Anzahl), kann das Testautomatisierungsgerät eine ldentifizierungssequenz auslösen, die ein regulärer Benutzer nicht erreichen kann. Auf diese Weise kann ein Testautomatisierungsgerät sicher von einem regulären Benutzer unterschieden und vom Benutzerendgerät identifiziert werden.
Das Benutzerendgerät weist eine Schnittstelle 52 (Testausgabeinterface) auf, die zum Beispiel als serielle Schnittstelle ausgeführt sein kann. An dieser Testschnittstelle stellt das Benutzerendgerät alle relevanten Ausgabedaten bereit (Displaydaten, Druckdaten, Motoranteuerungssignale, etc.). Die Testschnittstelle des Benutzerendgeräts wird mit einer weiteren seriellen Schnittstelle 11 des Test-Automatisierungsgerätes verbunden. Über diese Verbindung liest das Test-Automatisierungsgerät alle relevanten Ausgaben des Benutzerendgerät ein.

Die vorhandene Steuerungssoftware des Benutzerendgeräts kann sämtliche Ausgabedaten des Benutzerendgeräts nicht nur an deren Aktoren, Motoren und Anzeige- und Ausgabemitteln, sondern auch an der Testausgabeschnittstelle bereitstellen. Welcher Typ Testausgabedaten überhaupt zur Testausgabe kommt, kann in der Grundkonfiguration des Benutzerendgerät eingestellt werden. Die Tabelle zeigt einen Überblick, welche Typen von Testausgabedaten es gibt und welche davon nur bereitgestellt werden dürfen, wenn das Benutzerendgerät zuvor das Testautomatisierungsgerät sicher identifiziert hat:

| **Ausgabedaten** | **Autorisierung erforderlich ?** |
|---|---|
| Displayinhalte | Nein |
| Druckbilddaten | Ja |
| Schreibdaten für d. Chipkarten-Lese/Schreibeinheit | Ja |
| Motorensteuersignale | Nein |

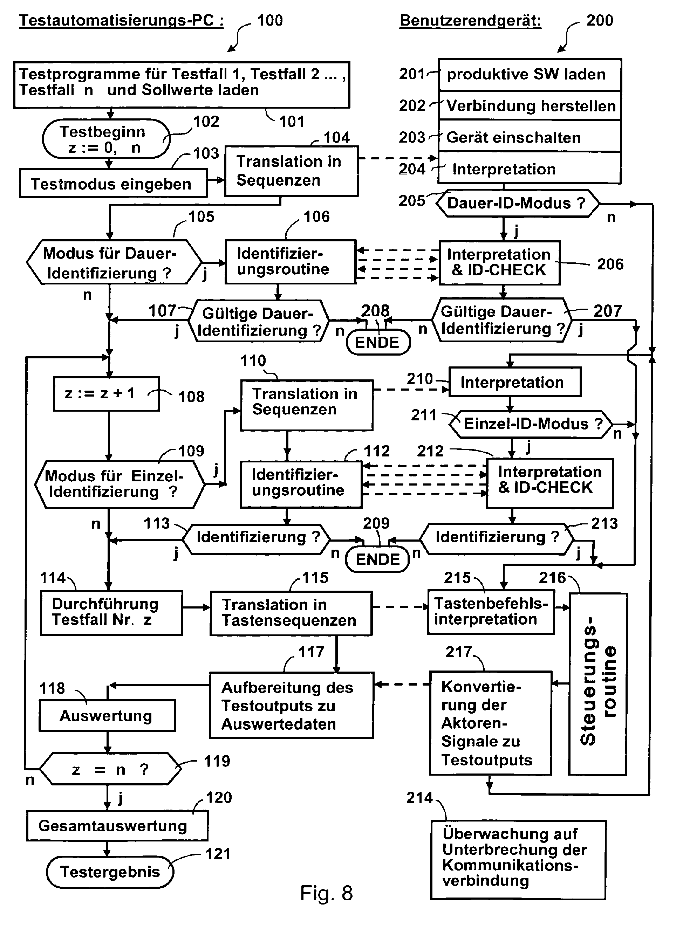

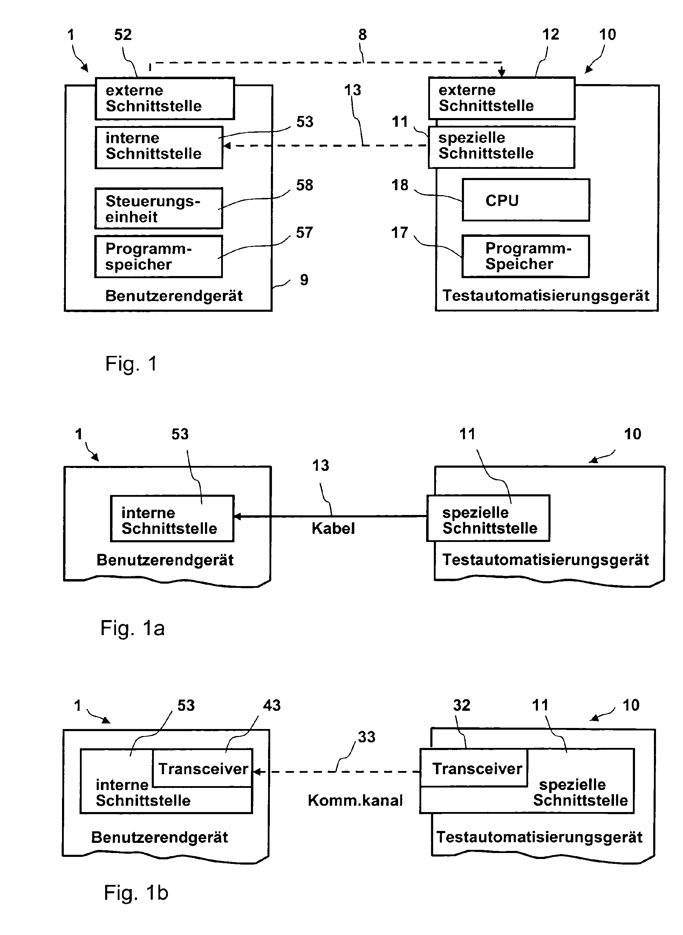

In der Fig. 8 ist ein Flussdiagramm für einen automatisierten Testablauf dargestellt. Der Testablauf 100 besteht dabei aus der Abarbeitung einer Anzahl n > 0 von Testfällen, die im Testablaufprogramm festgelegt wurden. Das Testablaufprogramm wird in einem vorbereitenden Schritt 101 im Programmspeicher 17 des Testautomatisierungsgerätes bereitgestellt bzw. in diesen geladen. Außerdem wird vorausgesetzt, dass das Benutzerendgerät 1 eine Release-Software im Speicher PROM 57 speichert (Schritt 201 des Verfahrens 200) und durch Schritte 202 und 203 bereits für einen Testablauf vorbereitet wurde. Im Schritt 202 wird eine Verbindung hergestellt, indem zum Beispiel die Tastatur abgetrennt und das Benutzerendgerät 1 zur Vorbereitung des Testablaufs mit dem Testautomatisierungsgerät 10 verbunden wird, indem zum Beispiel ein Kabel 13 aufgesteckt wird. Nachdem dann das Benutzerendgerät 1 über den Schalter 41 im Schritt 203 eingeschaltet worden ist, können im Schritt 204 empfangene simulierte Tastensignale zum Beispiel als Eingabe des gewünschten Testmodus interpretiert werden.
Nach dem Start des Testautomatisierungsgerätes, dem Speichern eines Start-Zählwertes z gleich 'Null' und eines Zählgrenzwertes n im Schritt 102 gelangt das Testautomatisierungsgerät zu einem Schritt 103 zur Eingabe des Testmodus vor dem ersten Testfall. Zum Beispiel wird zur Dauer-Identifizierung im Schritt 103 bei der Eingabe eine vorbestimmte Identifizierungsnummer vergeben, die für die Dauer des gesamten Testes gültig ist. In einer weiteren Subroutine (Schritt 104) erfolgt eine Translation von der vorbestimmten Identifizierungsnummer in simulierte Eingabesignale (Tastensequenzen) und deren Übermittelung (gestrichelter Pfeil) zum Benutzerendgerät. Nach dem Übermitteln der simulierten Eingabesignale zum Benutzerendgerät erfolgt im Schritt 204 eine Interpretation der simulierten Eingabesignale im Benutzerendgerät, zum Beispiel über ein Input-Event-Management-System des Betriebssystems des Benutzerendgeräts. Wird im nachfolgendem Abfrageschritt 205 festgestellt, dass kein Dauer-Identifizierungsmodus gewünscht wird, dann wird zum Schritt 210 verzweigt, um weitere Signale zu empfangen und zu interpretieren. Wird im Abfrageschritt 205 festgestellt, dass ein Dauer-Identifizierungsmodus gewünscht wird, dann wird zum Schritt 206 verzweigt. Im Schritt 206 wird eine Interpretation und eine ID-Überprüfung durch das Benutzerendgerät durchgeführt.
Das Testautomatisierungsgerät geht gesteuert durch ein Testablaufprogramm zum Abfrageschritt 105 weiter, um festzustellen, ob ein Modus für eine Dauer-Identifizierung eingegeben wurde. Ist das der Fall, d.h. wenn eine Autorisierung für die gesamte Testdauer erforderlich ist, erfolgt in einer Routine eine Identifizierung des Testautomatisierungsgerätes gegen das Benutzerendgerät. Dazu wird zum Schritt 106 verzweigt und eine Identifizierungsroutine aufgerufen, wobei mittels des Kontaktfeldes 19 automatisch eine Translation von Daten in simulierte Eingabesignale (Tastensequenzen) und deren Übermittelung (gestrichelte Pfeile) zum Benutzerendgerät vorgenommen wird. Im Rahmen der Kommunikation mit dem Benutzerendgerät werden auch Daten durch das Testautomatisierungsgerät empfangen und ausgewertet. So kann im nachfolgenden Abfrageschritt 107 festgestellt werden, ob eine ID-Überprüfung im Benutzerendgerät durchgeführt wurde und eine gültige Dauer-Identifizierung erkannt wurde. Ist das der Fall, dann wird zum Schritt 108 verzweigt und ein Zählwert z um 'Eins' inkrementiert. In den Schritten 106 bzw. 206 können auch Daten zur gegenseitigen Identifizierung ausgetausch werden, was nachfolgend anhand der Figur 9 noch näher erläutert wird. Im Ausführungsbeispiel gemäß der Figur 8 werden zur Identifizierung Eingabesignale, vorzugsweise Tastensequenzen, übermittelt.
Alternativ dazu kann in bekannter Weise durch eine Chipkarte bzw. eine RFID-Marke auf der einen Seite und eine Chipkarten-Schreib/Leseeinheit bzw. einen RFID-Transponder auf der anderen Seite eine Identifizierung erreicht werden. Das wird ebenfalls nachfolgend noch näher erläutert.
Wird jedoch in den weiteren auf die Schritte 106 bzw. 206 nachfolgenden Schritten 107 bzw. 207 festgestellt, dass keine gültige Dauer-Identifizierung vorliegt, dann wird der Testmodus beendet (Schritt 208). Wird aber vom Abfrageschritt 105 im Testablaufprogramm des Testautomatisierungsgerätes ermittelt, dass kein Modus für Dauer-Identifizierung eingestellt wurde, dann wird zum Schritt 108 verzweigt.
Nach der Inkrementierung von einem Zählwert z im Schritt 108 wird ein Abfrageschritt 109 im Testablaufprogramm des Testautomatisierungsgerätes erreicht und ermittelt, ob ein Modus für Einzel-Identifizierung eingestellt wurde. Ist das der Fall, dann wird zum Schritt 110 verzweigt und automatisch eine Translation von Daten in simulierte Eingabesignale (Tastensequenzen) und deren Übermittelung (gestrichelter Pfeil) zum Benutzerendgerät vorgenommen. Im Schritt 210 empfängt und interpretiert das Benutzerendgerät die übermittelten Daten. Nach dem Schritt 210 wird ein Abfrageschritt 211 erreicht, mittels welchem festgestellt werden kann, ob ein Einzel-Identifizierungsmodus gewünscht wird oder nicht. Somit wird durch die Release-Software ermöglicht, das Benutzerendgerät auf einen entsprechenden Testmodus mit Einzel-Identifizierung oder einen solchen ohne Identifizierung einzustellen.
Nach dem Schritt 110 zur Übermittelung von simulierten Eingabesignalen (Tastensequenzen) geht das Testablaufprogramm des Testautomatisierungsgerätes zum Schritt 112 weiter und eine Identifizierungsroutine wird aufgerufen, wobei automatisch eine Translation von Daten in simulierte Eingabesignale (Tastensequenzen) und deren Übermittelung (gestrichelter Pfeil) zum Benutzerendgerät erfolgt. Im Rahmen der Kommunikation mit dem Benutzerendgerät werden ebenfalls Daten vom Benutzerendgerät gesendet und durch das Testautomatisierungsgerät empfangen und ausgewertet. So kann im nachfolgenden Abfrageschritt 113 festgestellt werden, ob eine ID-Überprüfung im Benutzerendgerät durchgeführt wurde und eine gültige Einzel-Identifizierung erkannt wurde. Ist das der Fall, dann wird zum Schritt 114 verzweigt. Wenn das nicht der Fall ist, dann wird zum Schritt 209 zur Beendigung des Testmodus verzweigt.
Wird aber vom Abfrageschritt 109 im Testablaufprogramm des Testautomatisierungsgerätes ermittelt, dass kein Modus für Einzel-Identifizierung eingestellt wurde, dann wird unmittelbar zum Schritt 114 zur Durchführung des Testfalls der Nummer z des Testmodus verzweigt.
Wenn ein gewünschter Einzel-Identifizierungsmodus vom Benutzerendgerät erkannt worden ist, wird vom Abfrageschritt 211 zum nachfolgenden Schritt 212 verzweigt, wobei eine Interpretation der simulierten Testeingabesignale mittels des Input-Event-Management-Systems des Betriebssystems des Benutzerendgeräts erfolgt. Ebenfalls wird eine ID-Überprüfung im Benutzerendgerät durchgeführt. Danach wird vom Schritt 212 zum nachfolgenden Schritt 213 weiter und dabei dazu übergegangen, zu überprüfen, ob eine gültige Einzel-Identifizierung erfolgt ist. Wird also in den weiteren auf die Schritte 112 bzw. 212 nachfolgenden Schritten 113 bzw. 213 festgestellt, dass keine gültige Einzel-Identifizierung vorliegt, dann wird der Testmodus beendet (Schritt 209).
Nach der im Benutzerendgerät in Schritten 206 bzw. 212 erfolgten Interpretation der simulierten Eingabesignale und Feststellung einer gültigen Dauer-Identifizierung (Abfrageschritt 207) bzw. Einzel-Identifizierung (Abfrageschritt 213) wird ein Schritt 215 erreicht. Wenn aber kein Einzel-Identifizierungsmodus vom Benutzerendgerät erkannt worden ist, wird ebenfalls vom Abfrageschritt 211 zum Schritt 215 verzweigt, in welchem eine Interpretation der simulierten Eingabesignale in entsprechende Tastenbefehle erfolgt.
Mit dem Erreichen des Schrittes 114 beginnt eine Routine mit dem entsprechenden Testfall der Nummer z des Testmodus. In einer weiteren Subroutine (Schritt 115) erfolgt eine Translation von Testaktionen und - daten des Testfalls in simulierte Testeingabesignale (Tastensequenzen) und deren Übermittelung (gestrichelter Pfeil) zum Benutzerendgerät. Im Schritt 215 erfolgt eine Interpretation der simulierten Testeingabesignale über das Input-Event-Management-System des Betriebssystems des Benutzerendgeräts. Im Schritt 216 wird in einer weiteren Subroutine eine entsprechende Steuerungsroutine im Benutzerendgerät durchgeführt. Dann erfolgt im Benutzerendgerät 1 ein Schritt 217 zur Konvertierung von Anzeigeinhalten und Steuerungssignalen (Aktor- und Motorensteuerungssignalen) in Testausgabesignale und ein Übermitteln (gestrichelter Pfeil) der Testausgabesignale vom Benutzerendgerät 1 zum Testautomatisierungsgerät 10. Durch die Release-Software des Benutzerendgerätes 1 wird vom Schritt 217 zum Schritt 210 zur Interpretation weiterer simulierter Eingabesignale zurückverzweigt.
Im Schritt 117 erfolgt nach dem Empfang der Testausgabesignale eine abschließende Subroutine zur deren Translation in Auswertedaten bzw. zur Aufbereitung des Testoutputs zu Auswertedaten. Letztere werden im Schritt 118 zur Auswertung übergeben. Dann wird im Abfrageschritt 119 der Zählwert z überprüft, ob eine vorbestimmte Anzahl von n Testfällen bearbeitet wurde. Ist das nicht der Fall, dann wird zum Schritt 108 zurückverzweigt. Anderenfalls wird zu einer Gesamtauswertung im Schritt 120 verzweigt. Die Schritte 108 bis 119 werden entsprechend für jeden Testfall wiederholt. Nach einer Abarbeitung einer Anzahl n > 0 von Testfällen und Gesamtauswertung im Schritt 120 liegt im Testautomatisierungsgerät das Testergebnis vor, welches im Schritt 121 gespeichert wird. Die Reihenfolge der Ablaufschritte ist am Beispiel eines ersten Testfalls gezeigt. Sie wiederholt sich bei den nachfolgenden Testfällen analog. Das Testautomatisierungsgerät ist vorzugsweise ein Personalcomputer PC oder ein ähnliches Gerät. Das Benutzerendgerät weist außerdem eine unabhängige Überwachungsroutine 214 hinsichtlich von Unterbrechungen der Kommunikation zwischen beiden Geräten auf.

Aus der Fig. 9 geht eine Subroutine zur Identifizierung des Testautomatisierungsgerätes gegen das Benutzerendgerät hervor. Die Subroutine soll die Schritte 106 und 206 bei Dauer-Identifizierung näher verdeutlichen und trifft sinngemäß auch auf die Schritte 112 und 212 bei Einzel-Identifizierung zu. Die Schritte 106 bzw. 112 laufen im Testablaufprogramm des Testautomatisierungsgerätes 10 ab. Das Testautomatisierungsgerät speichert im Subschritt 1061 ein Schlüsselpaar Sₜₑₛₜ, Vₜₑₛₜ und ein Zertifikat Vₜₑₛₜ, Cᵤₛₑᵣ in einem ersten nichtflüchtigen Speicher.

Der Signierschlüssel Sₜₑₛₜ ist geheim und wird als privater Schlüssel nicht herausgegeben. Der Verifizierschlüssel Vₜₑₛₜ ist öffentlich und kann somit herausgegeben werden. Die Herausgabe erfolgt zusammen mit einem Zertifikat Cert, welches die Echtheit bestätigt.

Das Zertifikat Cert besteht aus dem Verifizierschlüssel Vₜₑₛₜ, welcher mittels einer Zertifiziersignatur Cᵤₛₑᵣ gesichert ist. Der Prüfschlüssel Vᵤₛₑᵣ ist öffentlich und bildet mit einem geheimen privaten Signierschlüssel Sᵤₛₑᵣ ein Schlüsselpaar. Der geheime private Signierschlüssel Sᵤₛₑᵣ wird zur Erzeugung der Zertifiziersignatur Cᵤₛₑᵣ benötigt und ist weder im Testautomatisierungsgerät noch im Benutzerendgerät gespeichert. Obwohl der geheime private Signierschlüssel Sᵤₛₑᵣ unbekannt ist, ermöglicht der Prüfschlüssel Vᵤₛₑᵣ eine Überprüfung des Zertifikats Cert.

Die Schritte 206 bzw. 212 laufen im Testablaufprogramm des Benutzerendgerätes ab. Das Benutzerendgerät 1 speichert im Subschritt 2061 in einem zweiten nichtflüchtigen Speicher einen Prüfschlüssel Vᵤₛₑᵣ, der zur Überprüfung des Zertifikats benötigt wird.
Das Benutzerendgerät generiert im Subschritt 2062 eine Zufallszahl r und übermittelt diese zum Testautomatisierungsgerät 10. Die Übermittelung von Daten wird wieder durch einen gestrichelten Pfeil dargestellt.

Das Testautomatisierungsgerät empfängt und verarbeitet die übermittelte Zufallszahl r im Subschritt 1062. Dabei erfolgt ein Signieren der Zufallszahl r mit dem geheimen privaten Signierschlüssel Sₜₑₛₜ, indem der private Signierschlüssel Sₜₑₛₜ und die Zufallszahl r mittels einer mathematischen Signier-Funktion sign verknüpft wird.
Die so erzeugte Signatur Sig, der öffentliche Verifizierschlüssel Vₜₑₛₜ und das zugehörige Zertifikat Cert werden anschließend zum Benutzerendgerät übermittelt. Die Übermittelung der vorgenannten Daten wird wieder durch einen gestrichelten Pfeil dargestellt. Nach dem Empfang der übermittelten Daten erfolgt deren Verarbeitung im Subschritt 2063 durch Interpretation der simulierten Tastensignale als Tastenbefehle, wobei zunächst das Zertifikat Cert mittels einer mathematischen Funktion, des Prüfschlüssels Vᵤₛₑᵣ und des Verifizierschlüssels Vₜₑₛₜ sowie anschließend die Signatur Sig mittels des Verifizierschlüssels Vₜₑₛₜ und der übermittelten Zufallszahl r überprüft wird. Beim Vorkommen der richtigen Zufallszahl r und des zum geheimen Signierschlüssels zugehörigen Verifizierschlüssels Vtest gilt die Signatur als echt. Das Vorkommen der richtigen Zufallszahl r und des richtigen Verifizierschlüssels Vₜₑₛₜ wird durch das Zertifikat Cert bestätigt. Zur Überprüfung der Signatur Cᵤₛₑᵣ des Zertifikats Cert wird der gespeicherte Prüfschlüssels Vᵤₛₑᵣ benötigt. Zum Abschluss der Datenverarbeitung im Subschritt 2063 erfolgt eine Übermittelung von einer o.K.-Mitteilung bzw. des Prüfergebnisses zum Testautomatisierungsgerät, welches wieder durch einen gestrichelten Pfeil dargestellt wird.
Das Testautomatisierungsgerät empfängt und verarbeitet die übermittelte o.K.-Mitteilung bzw. das Prüfergebnis im Subschritt 1062 und erzeugt ein Quittungssignal, welches anschließend in simulierte Tastensignale umgesetzt und zum Benutzerendgerät gesendet wird. Das Testablaufprogramm geht dann zur Abarbeitung des Schrittes 107 über. Das Benutzerendgerät empfängt und Interpretiert die simulierten Tastensignale als Tastenbefehle im Subschritt 2064. Das Benutzerendgerät geht dann gesteuert durch die Release-Software zur Abarbeitung des Schrittes 207 über, um eine gültige Identifizierung festzustellen.

Die Testausgabedaten, wie zum Beispiel Druckbilddaten und Schreibdaten für die Chipkarten-Lese/Schreibeinheit, erfordern eine Autorisierung und Identifizierung des Testautomatisierungsgerätes. Die Identifizierung des Testautomatisierungsgerätes kann auf verschiedene Arten erfolgen:
a) Durch spezielle Tastenfolgen am Keypad,
b) Durch Stecken einer Zugriffskontrollkarte in die Chipkarten-Lese/Schreibeinheit sowie
c) Durch eine drahtlose Eingabe/Identifizierung.

Die Grundkonfiguration des Benutzerendgeräts kann dabei so eingestellt sein, dass eine Identifizierung jeweils nur für den nächstfolgenden Tastaturbefehl gültig ist (Einmal-Identifizierung), oder dass die Identifizierung einen Testausgabemodus aktiviert, währenddessen alle durch Identifizierung geschützten Testausgaben an der Testausgabeschnittstelle bereitgestellt werden, solange bis der Testausgabemodus wieder deaktiviert wird (Dauer-Identifizierung). Die Deaktivierung kann wiederum durch eine der vorgenannten Arten a) oder b) oder c) oder einfach durch Ausschalten des Benutzerendgeräts erfolgen.
Die Identifizierung durch spezielle Tastenfolgen hat gegenüber der Identifizierung durch Zugriffskontrollkarte den Vorteil, dass sie sowohl für Einmal-Identifizierung als auch für Dauer-Identifizierung geeignet ist und sich in beiden Fällen reibungslos in den Betrieb des Benutzerendgeräts einfügt.
Grundsätzlich kann ein Benutzerendgerät eine Einmalidentifizierung unterstützen oder einen Modus für identifizierte Benutzer anbieten.
Bei der Einmalidentifizierung wird für eine zu schützende Funktion eine Identifizierung des Testautomatisierungsgerätes beim Aufruf der zu schützenden Funktion verlangt. Das Benutzerendgerät führt die Funktion nur aus, wenn die Identifizierung erfolgreich war.
Bei einem Modus für identifizierte Benutzer springt das Benutzerendgerät nach erfolgreicher Identifizierung in einen Dauer-ID-Modus, in dem alle zu schützenden Funktionen ohne weitere Identifizierung erreichbar sind. In diesem Fall könnte das Testautomatisierungsgerät das Benutzerendgerät in den Modus für identifizierte Benutzer fahren und anschließend alle Funktionen ohne weitere Maßnahmen auslösen. Außerdem wird das Benutzerendgerät 1 mit dem Sensor 55 versehen, der detektiert, ob das Kabel vom Testautomatisierungsgerät mit der Tastatursteckdose auf dem Mainboard oder in einer Gehäusemulde verbunden bleibt. Wird es unterbrochen (zum Beispiel, weil jemand wieder die Tastatur anschließt), so beendet das Benutzerendgerät automatisch den Modus für identifizierte Benutzer. Aus der Table 1 gehen die Arten der Identifizierung des Testautomatisierungsgeräts hervor.

| **Identifizierung durch** | **Einmal-Identifizierung** | **Dauer-Identifizierung** |
|---|---|---|
| Tastenfolgen am Keypad | Test-Automatisierungssystem "drückt" während Tastaturkommando reservierte Function Keys oder reservierte Identifiizierungssequenzen. | Test-Automatisierungssystem aktiviert einen Testmodus durch ein Tastaturkommando während es reservierte Function Keys oder reservierte Identifiizierungssequenzen "drückt". |
| Stecken einer Zugriffskontrollkarte | | Test-Automatisierungssystem aktiviert einen Testmodus durch ein Tastaturkommando während es das Einführen einer entsprechenden Zugriffskontrollkarte am Chipkartenleser simuliert. |
| RFID Token des Testers | | Tester aktiviert durch sein RFID einen Testmodus |

Neben der Identifizierung durch spezielle Tastenfolgen und der Identifizierung durch Zugriffskontrollkarte ist auch eine drahtlose Identifizierung durch RFID (Radio Frequency Identifikation Device) möglich. Dazu muss das Benutzerendgerät mit einem entsprechenden Sender/-Empfänger-Baustein ausgestattet sein.

Zusammenfassend ist herauszustellen, dass diese enorme Abstraktion einer Maschinengruppe (mit Keypad) ungenutzte Tasten bereitstellt, deren sequentielle Betätigung so definiert werden kann, dass ein kryptographisches challenge-response-Protokoll auf Basis digitaler Signaturen abläuft, wobei die Nachrichten in Tastensequenzen kodiert sind. Diese Art der Identifizierung ist vorteilhaft, wenn die Frankiermaschine bereits einen Prüfschlüssel für ein digitales Signatursystem eingebaut hat.

Die Sequenzen ungenutzter Tasten können so definiert werden, dass ein kryptographisches challenge-response Identifizierungsprotokoll abläuft, wobei die Nachrichten in Tastensequenzen kodiert sind. Ein geeignetes anderes Identifizierungsprotokoll ist bekannt aus Fiat, A. and A. Shamir (1986). "How to prove yourself: practical solutions to identification and signature problems." Advances in Cryptology― CRYPTO'86, Lecture Notes in Computer Science, vol. 263, ed. A. Odlyzko. Springer-Verlag, Berlin, 186-194.
Die miteinander in Verbindung stehenden Schnittstellen sind physikalisch gleiche serielle Schnittstellen. Dabei wird jede mögliche Eingabe (Tastaturcode, Sensoren, Chipkarteneingabe, etc.) eindeutig durch einen Eingabeparameter kodiert.
Das Testautomatisierungsgerät wird in einem erweiterten Ausführungsbeispiel als Client-Server System (nicht gezeigt) ausgelegt, wobei der Testautomatisierungsserver 80 über das Internet verschiedene Testszenarien anbietet und der Testautomatisierungsclient 10 über eine dritte externe Schnittstelle 23 eine Internetverbindung realisiert und mit dem Testautomati-sierungsserver 80 in Verbindung steht und die erste und zweite Schnittstelle 12, 11 als Testeingabe- und Testausgabeschnittstelle zum Benutzerendgerät 1 bereitstellt. Auf diese Weise hat man über den Testautomatisierungsserver die zeitgenaue Kontrolle darüber, welche Testszenarien aktuell angeboten werden.
Die Vorteile gegenüber Stand der Technik ergeben sich auch daraus, weil die unterschiedlichen Softwarearchitekturen und Einflüsse der Ländervarianten des Benutzerendgerätes zur Marginalität werden.
Somit können offensichtlich weitere andere Ausführungen der Erfindung entwickelt bzw. eingesetzt werden, die vom gleichen Grundgedanken der Erfindung ausgehen und von den anliegenden Ansprüchen umfasst werden.

## Patentansprüche

1. Testsystem für ein Benutzerendgerät (1), welches mit einem Testautomatisierungsgerät (10) kommunikativ verbindbar ist, wobei das Testautomatisierungsgerät (10) mindestens eine Datenverarbeitungseinheit (18) und einen nichtflüchtigen Speicher (17) zum Speichern eines Testablaufprogrammes aufweist, und wobei das Benutzerendgerät (1) mindestens eine Steuereinheit (58), einen nichtflüchtigen Speicher (57) und eine externe Schnittstelle (52) aufweist, **gekennzeichnet dadurch, dass** das Benutzerendgerät (1) im Inneren geschützt ist durch ein Sicherheitsgehäuse und eine interne Schnittstelle (53) aufweist, die mit einer speziellen Schnittstelle (11) des Testautomatisierungsgerätes (10) kommunikativ verbindbar ist, dass die Steuerungseinheit (58) und der nichtflüchtige Speicher (57) des Benutzerendgerätes (1) zum Laden einer Release-Software ausgebildet sind, wodurch das Benutzerendgerät programmiert ist, Testausgabesignale zu erzeugen und an der externen Schnittstelle (52) an das Testautomatisierungsgerät (10) auszugeben, dass Datenverarbeitungseinheit (18) des Testautomatisierungsgerätes (10) durch das Testablaufprogramm zur Ausführung mindestens einer Routine für mindestens einen Testfall programmiert ist, dass die Datenverarbeitungseinheit (18) mit der speziellen Schnittstelle (11) verbunden ist, über welche die im Testfall simulierten Testeingabesignale an die interne Schnittstelle (53) des Benutzerendgerätes (1) übermittelt werden.

2. Testsystem, nach Anspruch 1, **gekennzeichnet dadurch, dass** eine erste Schnittstelle (12) des Testautomatisierungsgerätes (10) und die externe Schnittstelle (52) des Benutzerendgerätes (1) bi-direktionale serielle Schnittstellen sind, über welche das Benutzerendgerät (1) und das Testautomatisierungsgerät (10) miteinander verbunden sind.

3. Testsystem, nach Anspruch 1, **gekennzeichnet dadurch, dass** die zweite spezielle Schnittstelle (11) des Testautomatisierungsgerätes (10) und die interne Schnittstelle (53) des Benutzerendgerätes (1) gleich aufgebaut und über ein Kabel (13) miteinander verbunden sind.

4. Testsystem, nach einem der Ansprüche 1 oder 2, **gekennzeichnet dadurch, dass** die bidirektionalen seriellen Schnittstellen (52) bzw. (12) des Benutzerendgerätes bzw. des Testautomatisierungsgerätes über ein Kabel (8) miteinander verbunden sind.

5. Testsystem, nach einem der Ansprüche 1 oder 2, **gekennzeichnet dadurch, dass** die bidirektionalen seriellen Schnittstellen (52) bzw. (12) des Benutzerendgerätes bzw. des Testautomatisierungsgerätes jeweils mit einem Transceiver (42) bzw. (32) ausgestattet sind, welche via Kommunikationskanal (38) miteinander kommunikativ verbunden sind.

6. Testsystem, nach Anspruch 5, **gekennzeichnet dadurch, dass** die Transceiver (42) bzw. (32) auf die bidirektionalen seriellen Schnittstellen (52) bzw. (12) aufsteckbar ausgebildet sind.

7. Testsystem, nach einem der Ansprüche 1 oder 2 und 5 oder 6, **gekennzeichnet dadurch, dass** eine Bluetooth-Kommunikationstechnik oder eine andere drahtlose Kommunikationstechnik zum Einsatz kommt.

8. Testsystem, nach Anspruch 1, **gekennzeichnet dadurch, dass** die zweite spezielle Schnittstelle (11) des Testautomatisierungsgerätes (10) und die spezielle Schnittstelle (53) des Benutzerendgerätes (1) gleich aufgebaut und jeweils mit einem Transceiver (43) bzw. (31) ausgestattet sind, welche via Kommunikationskanal (33) miteinander kommunikativ verbunden sind.

9. Testsystem, nach einem der Ansprüche 1 oder 8, **gekennzeichnet dadurch, dass** eine Bluetooth-Kommunikationstechnik oder eine andere drahtlose Kommunikationstechnik im Transceiver zum Einsatz kommt.

10. Testsystem, nach Anspruch 1, **gekennzeichnet dadurch, dass** die interne Schnittstelle (53) eine Tastaturschnittstelle (53) des Benutzerendgerätes (1) ist.

11. Testsystem, nach einem der Ansprüche 1, 3 oder 10, **gekennzeichnet dadurch, dass** die interne Schnittstelle (53) des Benutzerendgerätes (1) einen Sensor (55) aufweist, der eine physische Unterbrechung der Kommunikationsverbindung detektiert und dass die Steuereinheit (58) des Benutzerendgerätes durch die Release-Software programmiert ist, den Testmodus zu verlassen, wenn die Kommunikationsverbindung physisch unterbrochen ist.

12. Testsystem, nach Anspruch 1, **gekennzeichnet dadurch, dass** die Datenverarbeitungseinheit (18) und der nichtflüchtige Speicher (17) Bestandteil eines handelsüblichen Personalcomputers sind, der zum Einsetzen von Erweiterungskarten vorbereitet ist und die erste serielle und zweite spezielle Schnittstelle aufweist, über welche das Testautomatisierungsgerät (10) mit dem Benutzerendgerät (1) verbunden ist sowie dass der Personalcomputer mit mindestens einer Erweiterungskarte (14) ausgestattet ist, durch welche die erste serielle Schnittstelle (12) und die zweite spezielle Schnittstelle (11) angesteuert werden, um Testausgabesignale vom Benutzerendgerät zu empfangen und Testeingabesignale zum Benutzerendgerät zu senden.

13. Testsystem, nach Anspruch 12, **gekennzeichnet dadurch, dass** die Erweiterungskarte (14) ein von der Datenverarbeitungseinheit (18) gesteuertes Kontaktfeld (19) enthält, um Tastensignale zu simulieren.

14. Testsystem, nach einem der vorgenannten Ansprüche 1 bis 13, **gekennzeichnet dadurch, dass** mindestens eine Eingabeeinrichtung (62) des Benutzerendgerätes vorhanden und mit der internen Schnittstelle (53) verbindbar ist.

15. Testsystem, nach einem der vorgenannten Ansprüche 1 bis 14, **gekennzeichnet dadurch, dass** Eingabeeinrichtungen mehrfach von gleicher oder von unterschiedlicher Art vorhanden sind.

16. Testsystem, nach einem der vorgenannten Ansprüche 1 bis 15, **gekennzeichnet dadurch, dass** mindestens eine Eingabeeinrichtung (62) innerhalb des Benutzerendgerätes vorhanden und mit der internen Schnittstelle (53) kommunikativ verbindbar ist.

17. Testsystem, nach einem der vorgenannten Ansprüche 1 bis 15, **gekennzeichnet dadurch, dass** mindestens eine Eingabeeinrichtung (62) außerhalb des Benutzerendgerätes vorhanden und mit der internen Schnittstelle (53) kommunikativ verbindbar ist.

18. Testsystem, nach Anspruch 18, **gekennzeichnet dadurch, dass** die mindestens eine Eingabeeinrichtung (62) und interne Schnittstelle (53) des Benutzerendgerätes (1) jeweils mit einem Transceiver ausgestattet sind.

19. Testsystem, nach Anspruch 1, **gekennzeichnet dadurch, dass** das Benutzerendgerät ein zusätzliches Mittel (56, 59) zur Identifizierung des Testautomatisierungsgerätes (10) aufweist.

20. Testsystem, nach Anspruch 19, **gekennzeichnet dadurch, dass** das zusätzliche Mittel zur Identifizierung des Testautomatisierungsgerätes (10) eine Chipkarten-Schreib/Leseeinheit (59) ist und dass die Steuereinheit (58) des Benutzerendgerätes (1) zur Eingabe einer Identifizierungsnummer des Testautomatisierungsgerätes (10) über eine Chipkarte programmiert ist.

21. Testsystem, nach Anspruch 19, **gekennzeichnet dadurch, dass** das zusätzliches Mittel zur Identifizierung des Testautomatisierungsgerätes (10) ein RFID-Transponder (56) des Benutzerendgerätes (1) ist, welcher mit einer RFID-Marke des Test-Automatisierungsgerätes (10) kommuniziert.

22. Testsystem, nach Anspruch 1, **gekennzeichnet dadurch, dass** das Testautomatisierungsgerät (10) als Client-Server System ausgelegt ist, wobei ein Testautomatisierungsserver (80) über das Internet verschiedene Testszenarien anbietet und der Testautomatisierungsclient (10) über eine dritte externe Schnittstelle (23) eine Internetverbindung realisiert und mit dem Testautomatisierungsserver (80) in Verbindung steht und die erste und zweite Schnittstelle (12, 11) als Testeingabe- und Testausgabeschnittstelle zum Benutzerendgerät (1) bereitstellt.

23. Testautomatisierungsverfahren, umfassend die folgenden Schritte:
i.) Bereitstellung eines Testprogramms und Ausführung mindestens einer Routine für einen ersten Testfall,
ii.) Translation von Testaktionen und -daten des Testfalls in simulierte Testeingabesignale (Tastensequenzen),
iii.) Übermitteln der simulierten Testeingabesignale zum Benutzerendgerät,
iv.) Interpretation der simulierten Testeingabesignale im Benutzerendgerät,
v.) Durchführung einer entsprechenden Steuerung im Benutzerendgerät und Konvertierung von Anzeigeinhalten und Steuerungssignalen in Testausgabesignale,
vi.) Übermitteln der Testausgabesignale vom Benutzerendgerät zum Testautomatisierungsgerät,
vii.) Translation von Testausgabesignale zu Auswertedaten.
